# EUROPEAN PATENT APPLICATION

(11) **EP 1 843 619 A1**
(43) Date of publication of application: **10.10.2007**
(21) Application number: 07007133.7
(22) Date of filing: 04.04.2007
(51) Int. Cl.: H04Q 7/38

(54) **International call and data routing**

(30) Priority: 05.04.2006 US 398773
(71) Applicant: Bridgeport Networks, Inc., Chicago IL 60601 (US)
(72) Inventor: Han, Wen K., Lexington, Massachusetts 02420 (US); Wilhoite, Michael T., Chicago, Illinois 60610 (US); Blumenthal, Steven H., Lexington, Massachusetts 02421 (US)
(74) Representative: Müller-Boré & Partner Patentanwälte

(57) **Abstract**

Telecommunication services (i.e. international roaming support) are provided to users. User information for a first identity of a user in a first telecommunication network is maintained. An active presence for a mobile device for the user is maintained by means of a second identity in a second telecommunication network. A presence of the user in the first network is emulated using a gateway system (Network Convergence gateway) that couples the first telecommunication network to the second telecommunication network. Association between the first identity (e.g. the Mobile Identity number, MIN, or mobile phone number of the mobile device at the first-home-network) and the second identity (e.g. a Mobile Directory Number, MDN, assigned at the second-foreign or local-network) is maintained.

## Description

### BACKGROUND

This description relates to international call and data routing.

International roaming capabilities allow a cellular subscriber to roam outside of his home country and network and make and receive calls almost as if he were at home. Cellular phone operators both in the subscriber's home country and abroad charge international long distance and roaming charges for this service.

Some of the charges can be avoided by renting (at the destination) a local cellular phone or a local GSM SIM card to be inserted into the subscriber's home GSM phone.

To receive incoming calls while traveling abroad, a subscriber can leave a message on his voice mail asking callers to dial his overseas cellular number, resulting in long distance charges to the caller, or he can activate call forwarding on his home cellular phone to redirect automatically the call to his local cellular phone. The subscriber must remember to manually activate and deactivate call forwarding before and after overseas travel.

### SUMMARY

In general, in one aspect, telecommunication services are provided to users. User information for a first identity of a user in a first telecommunication network is maintained. An active presence for a mobile device for the user is maintained by means of a second identity in a second telecommunication network. A presence of the user in the first network is emulated using a gateway system that couples the first telecommunication network to the second telecommunication network.

Implementations may include one or more of the following features. An association of the first identity and the second identity is maintained. The first and second telecommunication networks are cellular networks. The gateway system couples the first telecommunication network to the second telecommunication network over an internet. Call traffic addressed to the first identity is forwarded to the second telecommunication network. The call traffic is sound data. The call traffic is text data. The call traffic is image data.

Advantages of implementations may include one or more of the following. Subscribers can receive their home cellular phone services, including regular voice service as well as other common cellular phone services such as voice mail, SMS and MMS, while traveling overseas without paying roaming charges. Subscribers continue to receive incoming calls to their home mobile phone number when roaming outside their home networks without the manual steps of activating and deactivating call forwarding. No special handsets are required, as subscribers can either use standard rental mobile phones while overseas or insert an overseas SIM card into their GSM phone. No changes are required to current GSM handset designs or current GSM or SIP protocols. The subscriber's home and foreign cellular phone services do not need to operate on compatible networks; for example, the subscriber's home cellular phone service could be CDMA and the foreign cellular phone could be GSM or vice-versa.

Other features and advantages will become apparent from the description and from the claims.

### DESCRIPTION OF DRAWINGS

FIG 1 and FIG 2 show a network.
FIGs. 3, 4, 5, and 6 show a flow chart.

### DETAILED DESCRIPTION

We describe an international roaming solution that bridges subscribers' home and overseas cellular phone services. Subscribers can receive their home cellular phone services (regular voice service, as well as other common cellular phone services such as voice mail, SMS and MMS) while traveling beyond the service area of their cellular using a foreign (or local) cellular phone, thereby avoiding or reducing roaming charges. The following terms are used in this description:
- BSC: Base Station Controller
- BTS: Base Transceiver Station
- CDMA: Code Division Multiple Access
- G-MSC: Gateway Mobile Switching Center
- GSM: Global System for Mobile communications
- GW: meda Gate Way
- HLR: Home Location Register
- MAP: Mobile Application Parts
- MDN: Mobile Directory Number
- MSC: Mobile service Switching Center
- NCG: Network Convergence Gateway
- S-MSC: Serving Mobile Switching Center
- SIM: Subscriber Identity Module
- SMS: Short Message Service
- SMSC: Short Message Service Center
- VM: Voice Mail box

Certain implementations that we describe here are explained in the context of GSM cellular networks but are also useful in the context of CDMA cellular networks, as well as other mobile phone and data standards.

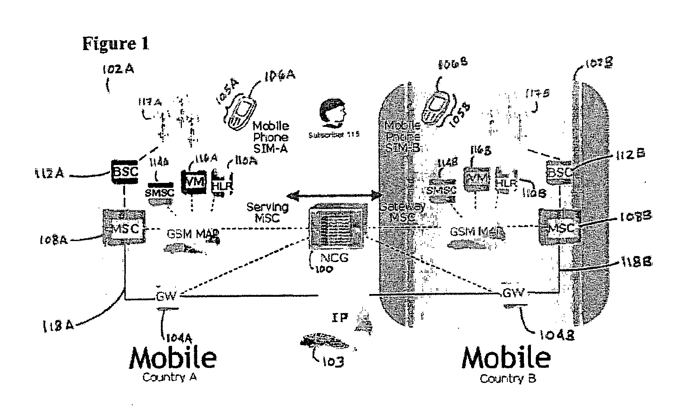

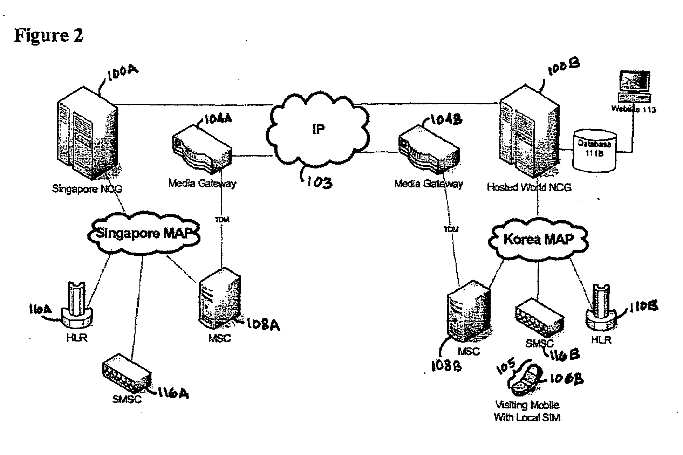

Referring to Figure 1, a network convergence gateway (NCG) 100 uses a high level network architecture to provide an international roaming feature to networks. In some examples, in actual service deployment, the NCG 100 could comprise a number of physical network elements strategically located for optimal network planning. For example, referring also to figure 2, NCG 100 could comprise a Home NCG 100A physically located in a home network 102A and a World NCG 100B located elsewhere, for example, in a foreign network 102B. Wherever located and whether or not comprised of multiple network elements, the NCG 100 functions as a single logical element.

In some examples, the NCG 100 works with media gateways (MGWs) 104A and 104B in networks 102A and 102B to facilitate call and data transfer over the internet 103. NCG 100 may also work with other standard network elements in networks 102A and 102B, such as mobile service switching centers (MCSs) 108A and 108B, home location registers (HLRs) 110A and 110B, base station controllers (BSCs) 112A and 112B, base transceiver stations (BTSs) 117A and 117B, short message service centers (SMSCs) 114A and 114B, and voice mail boxes (VMs) 116A and 116B.

In some examples, a subscriber 115 uses one cellular phone 105A in the home network 102A and another cellular phone 105B in the foreign network 102B. In some examples, the subscriber 115 uses a single GSM cellular phone 105 but replaces a home GSM SIM card 106A with a foreign SIM card 106B in his GSM cellular phone 105 to use in the foreign network 102B.

In some examples, in home network 102A, NCG 100 acts as a Serving Mobile Switching Center (S-MSC) for the subscriber 115 in the home network 102A while the subscriber 115 is active in the foreign network 102B. NCG 100 performs location registration with home network 102A using the Home HLR 110A. When the subscriber 115 is in foreign network 102B, the home network routes incoming calls to the subscriber's home cellular phone 105A to the NCG 100 as the Serving MSC in the home network 102A, using standard mobile network protocols. The NCG 100 causes the home network 102A to direct the calls to the Home GW 104A to be transferred as an SIP message to the foreign GW 104B in foreign network 102B.

In some examples, in the foreign cellular network 102B, the NCG 100 acts as a Gateway Mobile Switching Center (G-MSC) and routes incoming calls from the home network 102A for the subscriber 115 to the foreign network 102B and causes the foreign GW 104B to direct the calls to cellular phone 105B through an MSC 108B using standard MAP protocols. In some examples, the NCG 100 accesses a database 111B containing identifiers for the subscriber's home cellular phone 105A and corresponding foreign cellular phone 105B to determine how to route incoming calls.

The call leg 118A between the home network 102A and home GW 104A, as well as the call leg 118B between the foreign network 102B and foreign GW 104B, are local calls, thereby allowing the subscriber 115 to avoid or reduce traditional roaming charges.

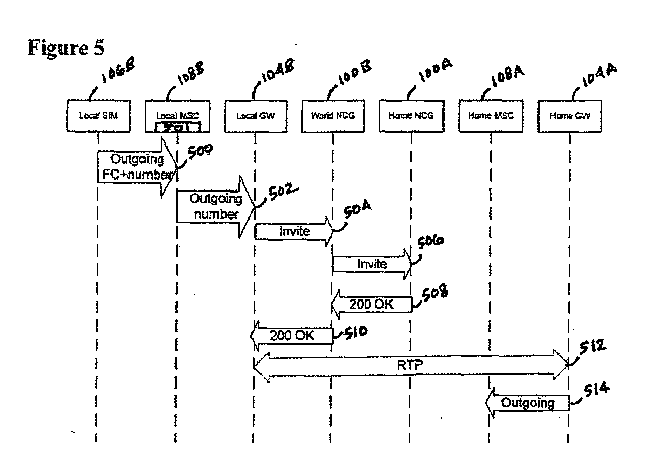

In some examples, a subscriber 115 calls a number in his home network 102A on his Local SIM 106B while in foreign network 102B. To avoid two-stage dialing, the roamed-in carriers (or Local carrier) could establish a Feature Code (FC) as a dialing prefix for calls that could be routed through the Home and Local GWs 104A and 104B. FCs are commonly used by the MSCs' data translation tables 501 (referring to Figure 5), for example, to route calls to special services such as weather reports, traffic, or radio stations. FCs instruct the MSC to route the call to a specific trunk group. Analogous to dialing "9" on a PBX to get an outside line, subscribers using a foreign SIM would use a FC to make calls through an International Roaming service.

Referring to Figure 2, as an illustration, a Singapore subscriber 115 travels to Korea. The subscriber 115 inserts a Korean SIM 106B into his GSM cellular phone 105 when he arrives in Korea.

In some examples, the identifying number ranges of the foreign SIM cards (here, Korean SIM 106B) are pre-programmed into the Korean HLR 110B and into a database 111B for the World NCG. 100B to create an association with the subscriber's MDN in Singapore. Several mechanisms are possible to program this association. In some examples, the subscriber 115 logs into a self-help website 113 and enters an identifier for his home SIM card 106A along with identifiers for one or more foreign SIM cards 106B, possibly one for each country he travels to frequently. In other examples, the subscriber 115 calls a toll free customer care telephone number for operator-assisted provisioning of his foreign SIM/MDN 106B. The association can also occur by prompting the subscriber 115 to send an SMS to notify the World NCG 100B of his Home SIM/MDN 106A.

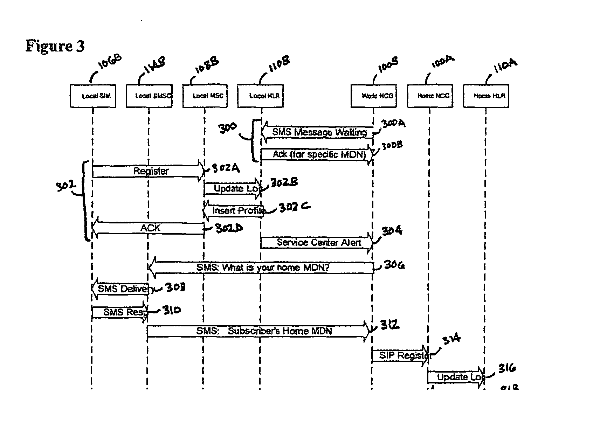

Referring to Figure 3, in some examples, the World NCG 100B asks the Local HLR 110B to notify it when the Local SIM 106B becomes active in the network (Step 300). The World NCG 100B in essence is acting as an SMSC in this case, using a common MAP method to tell the Local HLR 110B that an SMS message is waiting for the subscriber 115 (Step 300A). The Local HLR 110B issues an acknowledgment when it receives the SMS (Step 300B). When the local SIM 106B becomes active, the normal registration with the Local HLR 110B occurs (Step 302). In some instances, the SIM 106B registers with the Local MSC 108B (Step 302A), the Local MSC updates the location of SIM 106B at Local HLR 110B (Step 302B), the Local HLR 110B sends a profile message back to the Local MSC 108B, establishing that the World NCG 100B will serve as the MSC for the Local SIM 106B (Step 302C), and the Local MSC sends an acknowledgement back to the Local SIM 106B (Step 302D). The Local HLR 110B then notifies the World NCG 100B that the SIM 106B is active, using a Service Center Alert that contains the Local SIM's 106B MDN (Mobile Directory Number) and the ID of its serving MSC (Step 304).

The World NCG 100B launches an SMS to the subscriber 115 asking the subscriber 115 for his Home MDN (Step 306), which is delivered to SIM 106A by the Local SMSC 114B using standard methods (Step 308). The subscriber 115 responds to the Local SMSC 114B with text that includes his Home MDN, which is the home telephone number he would like associated with his foreign telephone number (Step 310). The local SMSC sends the SMS response back to the World NCG 100B (Step 312).

The World NCG 100B maps the home MDN to the matching Home NCG 100A. It then sends a Register message to the Home NCG 100A that contains the Home MDN it received from the subscriber 115 via SMS (Step 314).

The Home NCG 100A then updates the location of the Home MDN with the Home HLR 110A, establishing that the Home NCG 100A will serve as the MSC in the home network 102A for that number (Step 316). The Home HLR 110A sends a profile for the subscriber's Home MDN back to the Home NCG 100A (Step 318).

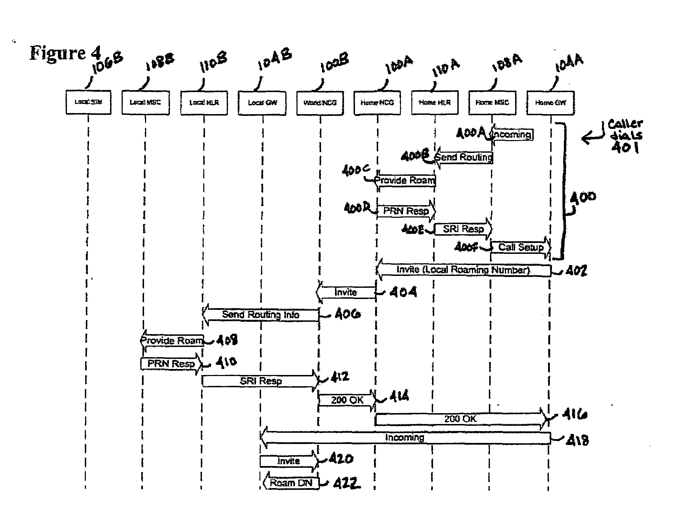

Referring to Figure 4, in some examples, a caller 401 attempts to call the subscriber 115 by dialing the subscriber's Home MDN, although the subscriber 115 is in a foreign network 102B. In this instance, normal call setup occurs within the Home domain (Step 400). The call comes in to the Home MSC 108A (Step 400A), which sends the routing information to the home HLR 110A (Step 400B). The Home HLR 110A looks up the subscriber's Home MDN and notes that Home NCG 100A is operating as the serving MSC for that number. The Home HLR 110A provides roaming information for the call to the Home NCG 100A (Step 400C). The Home NCG 100A informs the Home HLR 110A that the call should be routed through the Home GW 104A (Step 400D). The Home HLR 110A passes this information back to the Home MSC 108A (Step 400E), which then routes the call to the Home GW 104A (Step 400F).

The Home GW 104A extends an Invite to the Home NCG 100A to request information in SIP format about where the HomeGW 104A should route the call (Step 402). The Home NCG 100A passes the Invite to the World NCG 100B, which looks up the Home MDN in a database 111B to determine that the Local SIM 106B is associated with that Home MDN (Step 404).

The World NCG, now acting as the Local G-MSC for Local SIM 106B, launches standard "incoming call" MAP messages to the Local HLR 110B with the corresponding Local MDN routing information for Local SIM 106B (Step 406). The Local HLR 110B provides roam information to the Local MSC 108B (Step 408), which replies with a message confirming that the Local SIM 106B is within its service area (Step 410). The Local HLR 110B sends an SRI Response back to the World NCG 100B, indicating that the proper Local MSC 108B for Local SIM 106B has been located (Step 412). The World NCG 100B passes an OK message back to the Home NCG 100A with the identity of the Local GW 104B to which the Home GW 104A should route the call (Step 414). The Home NCG 100A forwards the OK message on to the Home GW 104A (Step 416).

The Home GW 104A then extends the call to the correct Local GW 104B in an RTP session (Step 418). Upon receipt of the call, the Local GW 104B queries the World NCG 100B to determine where to route the call. The World NCG 100B responds with the appropriate Local MSC 108B servicing the Local SIM 106B. The Local GW 104B routes the call to that Local MSC 108B (Step 424), which sends an alert to the Local SIM 106B (Step 426). The subscriber's phone abroad 106B therefore rings in response to the call to his local MDN.

If the subscriber 115 doesn't answer or is busy, the World NCG 100B can use a SIP message (302 Redirect, see figure 3 ) to redirect the call back to the Home NCG 100A, which continues to operate as the Serving MSC. The Home NCG 100A can interact with the Home HLR 110A for routing instructions based on the failure reason. In some examples, when the subscriber does not answer the call, the caller can be routed to the subscriber's voicemail box 116A in home network 102A (see figure 1). Using standard methods, the Home NCG 100A instructs the Home GW 104A to forward the call through the Home MSC 108A to the Home Voice Mail Box 116B, where the caller 401 can leave a message. A "voice mail message waiting" indicator arrives at the Home NCG 100A as an SMS message. The Home NCG 100A can pass the message on to the World NCG 100B, which in turn forwards the SMS to Local SIM 106B as explained below. In some examples, the subscriber 115 calls his Home Voice Mail Box 116A from his Local SIM 106B in foreign network 102B to check this message. In some examples, the subscriber 115 calls his Home Voice Mail Box 116 from his Home SIM 106A upon his return to his home country.

Referring to Figure 5, in some examples, on his Local SIM 106B, the subscriber 115 makes an outbound call to an entity in the home network 102A. The subscriber 115 dials a FC followed by a country code and desired DN in the home network 102A (Step 500). The foreign MSC 108B recognizes that the subscriber 115 has entered a FC and routes the call to the foreign GW 104B (Step 502). The Local GW 104B sends an Invite to the World NCG 100B, as its serving MSC, to determine where to route the call (Step 504). The World NCG 100B performs digit analysis and determines that the call should be extended to the Home NCG 100A (Step 506). In some examples, the Home NCG 100A performs steps similar to Steps 406-412, as described above, to determine where to route the call. The Home NCG 100A forwards an OK message with the identity of the appropriate home GW 104A back to the World NCG 100B (Step 508), which forwards the message back to the foreign GW 104B (Step 510).

The NCG 100A sets up the call between the foreign GW 104B and the Home GW 104A (Step 512). The Home GW 104A then follows standard outgoing routing procedures to the appropriate Home Serving MSC 108A (Step 514). In some examples, where the DN is not a cellular number, the Home Media Gateway routes the call to the Home PSTN using standard methods.

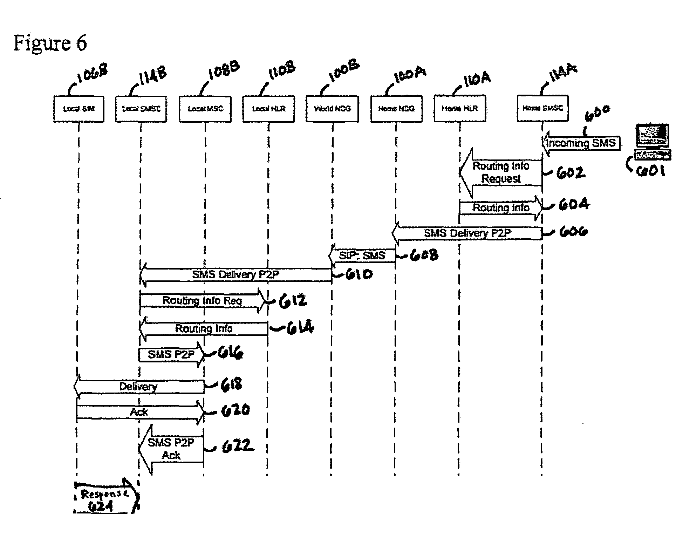

A subscriber 115 in foreign network 102B can also receive SMS messages on his Local SIM 106B that are addressed to his home SIM 106A. Referring to Figure 6, in some examples, another user or a device such as a computer program 601 sends an SMS containing voice or image data to the subscriber's Home MDN. In some examples , the Home MSC 108A sends the subscriber 115 a "voice mail message waiting" notice 603 using SMS. In other examples, there will be a similar data flow for MMS (Multimedia Messaging Service) because MMS notification is done via SMS.

Using normal MAP methods, the Home SMSC 114A receives an SMS message (Step 600) and queries the Home HLR 110A for the appropriate routing information (Step 602). The Home HLR 110A informs the Home SMSC 114A that the Home NCG 100A is acting as the subscriber's Home MDN's Service MSC (Step 604). The Home SMSC 114A delivers the message to the Home NCG 100A (Step 606). The Home NCG 100A converts the SMS message to a SIP format and extends the message to the World NCG 100B (Step 608). The World NCG 100B looks up the Home MDN in its translation table to map the number to the subscriber's Local MDN, and converts the SIP message back to P2P format to forward it to the appropriate Local SMSC 114B (Step 610).

The Local SMSC 114B delivers the message to the subscriber 115 at his Local SIM 106B using normal MAP methods. The Local SMSC 114B queries the Local HLR 110B for the appropriate routing information (Step 612). The Local HLR 110B responds with the identity of the Local MSC serving the subscriber's Local MDN (Step 614). The Local SMSC 114B forwards the message accordingly to the Local MSC 108B (Step 616), who delivers it to the Local SIM 106B using standard methods (Step 618). The Local SIM 106B acknowledges receipt of the message to the Local MSC 108B (Step 620), who forwards the acknowledgement to the Local SMSC (Step 622).

In some examples, a subscriber's response 624 to the SMS would follow a similar path in the reverse direction.

Other embodiments are within the scope of the following claims.

## Claims

1. A method for providing telecommunication services to users comprising:
maintaining user information for a first identity of a user in a first telecommunication network;
maintaining an active presence for a mobile device for the user by means of a second identity in a second telecommunication network; and
emulating a presence of the user in the first network using a gateway system that couples the first telecommunication network to the second telecommunication network.

2. The method of claim 1 further comprising:
maintaining an association of the first identity and the second identity.

3. The method of any one of the preceding claims, wherein the first and second telecommunication networks are cellular networks.

4. The method of any one of the preceding claims, wherein the gateway system couples the first telecommunication network to the second telecommunication network over an internet.

5. The method of any one of the preceding claims, further comprising:
forwarding call traffic addressed to the first identity to the second telecommunication network.

6. The method of claim 5 wherein the call traffic comprises sound data, text data and/or image data.

7. A computer program product comprising computer-readable instructions which when loaded and executed on a suitable system perform the steps of a method for providing telecommunication services to users according to any of the preceding claims.
